# FASCICULE DE BREVET EUROPEEN

(11) **EP 2 701 973 B1**
(45) Date de publication et mention de la délivrance du brevet: **23.08.2017**
(21) Numéro de dépôt: 12722427.7
(22) Date de dépôt: 17.04.2012
(51) Int. Cl.: B64C 1/18, F16S 3/06

(54) **FUSELAGE D'AÉRONEF ET PROCÉDÉ DE RÉALISATION D'UN PLANCHER DANS UN TEL FUSELAGE**
FLUGZEUGRUMPF UND VERFAHREN ZUR HERSTELLUNG EINES BODENS IN EINEM DERARTIGEN RUMPF
AIRCRAFT FUSELAGE AND METHOD FOR CONSTRUCTING A FLOOR IN SUCH A FUSELAGE

(30) Priorité: 26.04.2011 FR 1101290
(43) Date de publication de la demande: 05.03.2014
(73) Titulaire: Airbus Operations SAS, 31060 Toulouse (FR)
(72) Inventeur: GUERING, Bernard, F-31850 Montrabe (FR)
(74) Mandataire: Santarelli
(86) Numéro de dépôt international: PCT/FR2012/050840
(87) Numéro de publication internationale: WO 2012/146858

(56) Documents cités:
- FR-A1- 2 900 125
- US-A1- 2009 321 569
- US-A1- 2011 001 008

## Description

La présente invention concerne un fuselage d'aéronef et un procédé de réalisation d'un plancher dans un tel fuselage.

La plupart des aéronefs présentent un fuselage de forme globalement cylindrique. La structure du fuselage comporte des cadres sensiblement circulaires disposés transversalement et reliés les uns aux autres par des longerons.

Dans les aéronefs destinés au transport de passagers, il convient de réaliser à l'intérieur du fuselage un plancher pour accueillir les passagers. Pour réaliser un tel plancher, une solution habituelle consiste à disposer une traverse à l'intérieur de chaque cadre de la structure du fuselage et de réaliser un plancher sur les traverses ainsi disposées. Ce plancher intègre le plus souvent des rails longitudinaux qui sont utilisés pour réaliser la fixation de sièges destinés à accueillir les passagers ainsi que de divers éléments (parois, meubles, ...) utilisés pour réaliser l'aménagement intérieur de l'aéronef.

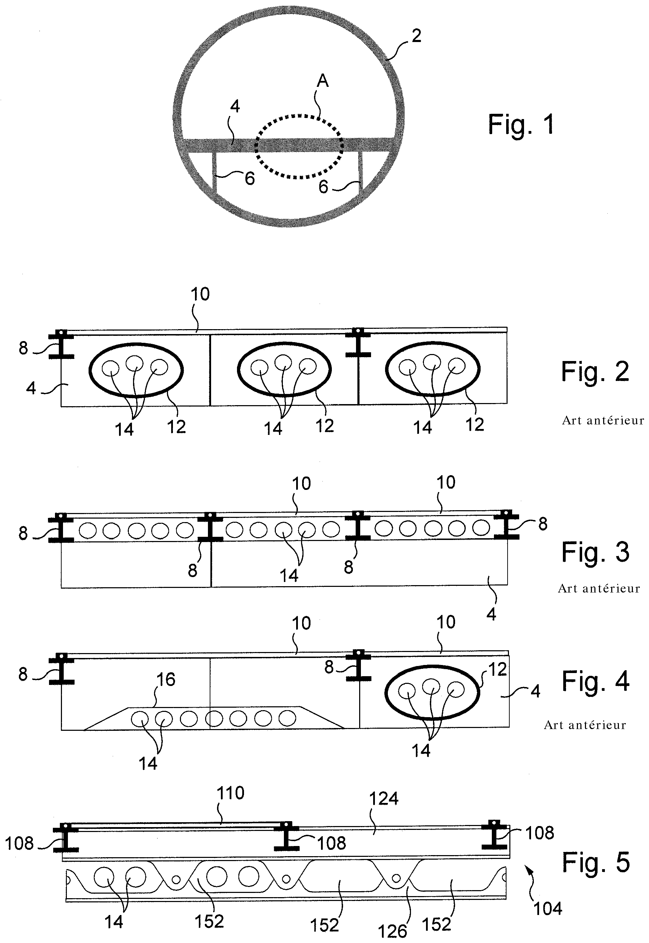

La figure 1 illustre de manière très schématique une coupe transversale d'un fuselage d'aéronef. On reconnaît ici un cadre 2 de forme circulaire. Une traverse 4 est montée sur le cadre 2 et est destinée à participer à la réalisation d'un plancher pour soutenir la charge des passagers et des divers éléments destinés à se trouver au-dessus du plancher ainsi qu'à réaliser la séparation entre, d'une part, une cabine destinée à accueillir les passagers et le cockpit et, d'autre part, une partie inférieure de l'aéronef formant une soute. Pour renforcer la structure du plancher, des bielles 6 sont éventuellement prévues pour soutenir une traverse 4.

La présente invention concerne plus particulièrement la structure d'une traverse 4 telle celle montrée très schématiquement sur la figure 1. Les figures 2 à 4 illustrent des traverses 4 connues de l'art antérieur, la figure 5 illustrant la structure d'une traverse selon la présente invention. Les vues des figures 2 à 5 correspondent à des vues à échelle agrandie du détail A de la figure 1.

Une première structure de traverse 4 est illustrée sur la figure 2. Dans cette solution, des rails longitudinaux 8 sont intégrés dans la hauteur de la traverse 4. La solution proposée ici permet de profiter de toute la hauteur permise par le volume du plancher pour intégrer la traverse 4. Elle donne donc au plancher une très bonne résistance mécanique. On reconnaît sur cette figure 2 également des panneaux 10 qui s'étendent d'une traverse 4 à l'autre pour former le plancher proprement dit. Pour permettre l'intégration de systèmes (électriques, pneumatiques, hydrauliques, etc.) des ouvertures 12 sont pratiquées dans la traverse 4. Si cette solution permet un bon guidage et un bon maintien de systèmes 14, il s'avère que la mise en place de ces systèmes 14 est une opération pénible et coûteuse en temps. En effet, certains harnais de câbles pèsent plusieurs quintaux et il convient de faire circuler de tels harnais au travers des ouvertures 12 de traverses 4 successives.

La figure 3 illustre une autre solution dans laquelle les rails longitudinaux 8 sont posés sur la traverse 4. Comme il ressort de cette figure, les panneaux 10 formant le plancher proprement dit reposent quant à eux sur les rails longitudinaux 8 et les systèmes 14 circulent entre la traverse 4 et les panneaux 10.

La solution proposée ici permet une intégration facilitée des systèmes. Les harnais électriques par exemple sont déroulés facilement et viennent simplement reposer sur les traverses.

Par contre, sur le plan mécanique, les panneaux 10 du plancher participent peu à la rigidité de l'ensemble du plancher et des renforts doivent être prévus pour obtenir les performances mécaniques satisfaisantes. Par rapport à la structure montrée sur la figure 2, il convient soit de prévoir un volume plus important pour réaliser le plancher, soit d'augmenter la masse de celui-ci (ou bien entendu une combinaison de ces deux variantes).

La solution de la figure 4 essaye d'intégrer les avantages de la solution illustrée sur la figure 2 et ceux de la solution de la figure 3, en minimisant les inconvénients de ces précédentes solutions. Dans cette solution, la partie supérieure de la traverse 4 intègre les rails longitudinaux 8. Les panneaux 10 formant le plancher proprement dit reposent sur les traverses 4 et les rails longitudinaux 8 comme dans la forme de réalisation montrée sur la figure 2. On retrouve ici aussi des ouvertures 12 pour le passage de systèmes 14. Toutefois, ces ouvertures sont réservées pour intégrer les systèmes les plus faciles à mettre en place. Ces ouvertures 12 reçoivent par exemple des circuits d'eau ou des câbles de faibles diamètres. Les harnais plus lourds et plus difficiles à mettre en place sont logés dans des échancrures 16 réalisées dans la partie inférieure de la traverse 4.

Cette solution résout ainsi partiellement le problème de la pénibilité de la pause de certains systèmes. Il convient de remarquer par exemple que la capacité en systèmes de la solution proposée sur la figure 4 est inférieure à celle de la solution proposée sur la figure 3. Sur le plan mécanique, la rigidité obtenue est quant à elle un peu inférieure à celle de la structure proposée par la figure 2.

Le document US2011/0001008 montre un fuselage d'aéronef comportant un plancher avec les caractéristiques techniques du préambule de la revendication 1. Il est également connu du document FR 2947525 un plancher d'aéronef comprenant une partie centrale susceptible d'être assemblée à l'extérieur du fuselage puis montée dans celui-ci après assemblage. Les traverses de la partie centrale du plancher comprennent chacune une partie supérieure et une partie inférieure, un espace étant ménagé entre les deux parties pour le passage de systèmes tels que des conduites de fluides, des faisceaux électriques ou similaires. Une fois les systèmes mis en place entre les deux parties des traverses chaque partie supérieure de traverse est solidarisée avec sa partie inférieure, la partie centrale de plancher est complétée par des panneaux de plancher, puis celle-ci est montée dans le fuselage. A cet effet, chaque traverse est montée à ses extrémités de façon articulée sur l'extrémité d'un tronçon de traverse ou éclisse fixé au fuselage et supporté par une bielle au voisinage de l'articulation.

La présente invention a entre autres pour but de fournir une structure de fuselage qui offre de bonnes performances mécaniques et permette une intégration facile d'un grand nombre de systèmes sans nécessiter un assemblage en dehors du fuselage d'une partie du plancher et des systèmes. La présente invention propose un fuselage d'aéronef tel que définie par la revendication 1 et un procédé de réalisation d'un fuselage d'aéronef comportant un plancher tel que définie par la revendication 12. À cet effet, l'invention a pour objet un fuselage d'aéronef comportant des traverses destinées à la réalisation d'un plancher, l'une au moins desdites traverses comportant une partie supérieure, une partie inférieure, des moyens de liaison de la partie inférieure à la partie supérieure, et au moins une ouverture pour le passage de systèmes délimitée entre la partie inférieure et la partie supérieure, ce fuselage étant remarquable en ce que la partie supérieure de ladite traverse est fixée sur le fuselage et est dimensionnée de manière à supporter les contraintes susceptibles de s'appliquer à ladite traverse lorsque l'aéronef reste au sol, et en ce que la partie inférieure de ladite traverse est fixée à la partie supérieure de celle-ci de manière à la renforcer de telle sorte qu'ainsi assemblées, la partie supérieure et la partie inférieure sont aptes à supporter les contraintes susceptibles de s'appliquer à ladite traverse dans des conditions de vol de l'aéronef. Grâce à un tel fuselage à traverses en deux parties, le montage à l'intérieur du fuselage des systèmes entre les deux parties de traverse se trouve grandement facilité, tandis que le fuselage offre de bonnes performances mécaniques aussi bien pendant qu'après cette opération.

Suivant une caractéristique possible de l'invention, la partie supérieure et la partie inférieure de ladite traverse présentent des pattes de liaison, et les pattes de liaison de la partie inférieure sont disposées de manière à pouvoir faire face aux pattes de liaison de la partie supérieure. Cette forme de réalisation permet de réserver un grand espace au logement de systèmes.

Pour assurer une bonne liaison de la partie supérieure avec la partie inférieure, et conférer de la sorte de bonnes caractéristiques mécaniques, la partie supérieure et la partie inférieure présentent par exemple chacune des alésages disposés de manière à pouvoir coïncider les uns avec les autres, et les moyens de liaison comportent avantageusement un boulon conique.

Suivant un mode de réalisation préféré qui permet d'assurer une liaison simple et robuste entre les deux parties de traverse, la partie supérieure présente des paires de pattes de liaison formant des étriers, une patte de liaison de la partie inférieure pouvant venir prendre place entre les deux pattes de liaison de la partie supérieure, ou inversement.

Suivant une caractéristique possible de l'invention, entre lesdites pattes de liaison sont formées des ouvertures dans lesquelles peuvent venir prendre place les divers systèmes, lesdites ouvertures étant délimitées vers le haut par ladite partie supérieure et vers le bas par ladite partie inférieure.

Suivant une autre caractéristique possible de l'invention, la partie supérieure de ladite traverse est un profilé à section en I et la partie inférieure de ladite traverse présente une semelle et une nervure. Ces profils des parties supérieure et inférieure de la traverse permettent de garantir des bonnes performances mécaniques du fuselage aussi bien pendant la fabrication que pendant l'exploitation de l'aéronef.

Suivant une autre caractéristique possible de l'invention, ledit profilé en I comporte une aile inférieure portant lesdits étriers et ladite nervure porte lesdites pattes de liaison de la partie inférieure. Cela signifie que les ouvertures de passage des systèmes sont ménagées entre l'aile inférieure du profilé en I et la partie inférieure de la traverse, et que par conséquent le profilé en I est dépourvu d'ouvertures susceptibles d'affecter ses caractéristiques mécaniques.

Suivant une autre caractéristique possible de l'invention, la traverse présente une partie supérieure réalisée dans un matériau différent de celui utilisé pour réaliser sa partie inférieure, ce qui peut, par exemple permettre de réaliser des gains de poids.

C'est ainsi, par exemple, que dans le cas d'un aéronef présentant une structure en matière composite, une traverse peut présenter une partie supérieure réalisée dans une matière composite, notamment une matière composite intégrant des fibres de carbone, et une partie inférieure réalisée dans un matériau conducteur de l'électricité, tel un métal ou un alliage métallique. La partie métallique peut alors servir pour assurer un retour de courant dans l'aéronef.

Suivant une autre caractéristique possible de l'invention , le plancher comporte un ensemble de traverses conformes à ladite traverse en deux parties ci-dessus et disposées parallèlement les unes par rapport aux autres, les parties supérieures des traverses sont reliées entre elles par des rails dits rails longitudinaux, et au moins un rail longitudinal présente des encoches dans chacune desquelles vient loger une traverse. Dans un tel plancher, les rails longitudinaux, par exemple des rails destinés à la fixation de sièges d'aéronef, sont donc intégrés au moins partiellement dans la hauteur de la partie supérieure des traverses.

La présente invention concerne également un aéronef comportant un fuselage tel que défini ci-dessus.

Enfin, la présente invention concerne aussi un procédé de réalisation d'un plancher dans un fuselage d'aéronef, ledit plancher comportant des traverses formant une structure porteuse apte à recevoir des panneaux de plancher et à supporter des systèmes, l'une au moins desdites traverses étant réalisée en deux parties distinctes comprenant une partie supérieure et une partie inférieure délimitant entre elles au moins une ouverture pour le passage de systèmes, ce procédé étant remarquable en ce que :
- dans une première étape seule la partie supérieure de traverse est fixée sur le fuselage,
- dans une deuxième étape lesdits systèmes sont mis en place sous ladite partie supérieure de traverse, et
- dans une troisième étape ladite partie inférieure de traverse est solidarisée à ladite partie supérieure.

Grâce à ce procédé, le montage des systèmes peut être effectué directement à l'intérieur du fuselage de l'aéronef tout en étant beaucoup plus aisé que dans le cas où les traverses sont en une seule pièce.

Des détails et avantages de la présente invention ressortiront mieux de la description qui suit, faite en référence aux dessins schématiques annexés sur lesquels :
La figure 1 est une vue en coupe transversale schématique d'un fuselage d'aéronef,
Les figures 2 à 4 sont des vues de détail de la zone A de la figure 1, ces figures ayant déjà été décrites au préambule de la présente demande,
La figure 5 est une vue correspondant aux vues des figures 2 à 4 illustrant une solution selon la présente invention,
La figure 6 illustre en élévation une partie supérieure d'une traverse selon la présente invention,
La figure 7 est une vue semblable à la figure 6 illustrant également en élévation une partie inférieure d'une traverse selon la présente invention,
La figure 8 illustre en élévation une traverse selon la présente invention en phase opérationnelle,
La figure 9 est une vue en perspective de l'ensemble montré sur la figure 8,
La figure 10 est une vue en coupe selon la ligne de coupe X-X de la figure 8, et
La figure 11 est une vue en coupe selon la ligne X-X de la figure 8, à échelle agrandie, illustrant la liaison entre partie inférieure et une partie supérieure d'une traverse selon la présente invention.

Les figures 1 à 4 ont été décrites dans le préambule du présent document. Comme mentionné dans ce préambule, la figure 5 est une vue à échelle agrandie de détail de la zone A de la figure 1. Cette figure 5 illustre la structure d'un plancher d'aéronef selon la présente invention. Ce plancher comporte des traverses 104 selon la présente invention, des rails longitudinaux 108 ainsi que des panneaux 110 de plancher.

Les rails longitudinaux 108 ne seront pas décrits en détails ici. Ces rails, dans un plancher selon la présente invention, peuvent reprendre une forme classique de rails longitudinaux utilisés habituellement dans la structure d'un plancher d'aéronef et destinés à recevoir par exemple les sièges d'une cabine d'aéronef. Dans la forme de réalisation représentée ici, les rails longitudinaux 108 se présentent sous la forme d'un rail profilé en I qui présente en outre une rainure utilisée notamment pour la fixation de sièges ou d'autres éléments sur le plancher correspondant.

Les panneaux 110 qui forment le plancher proprement dit ne sont pas non plus décrits. Il peut s'agir ici de tout type de panneau ou plaque de l'art antérieur compatible avec la structure du plancher selon la présente invention.

De manière tout à fait originale, la traverse 104 est réalisée en deux parties, la partie supérieure 124 et une partie inférieure 126.

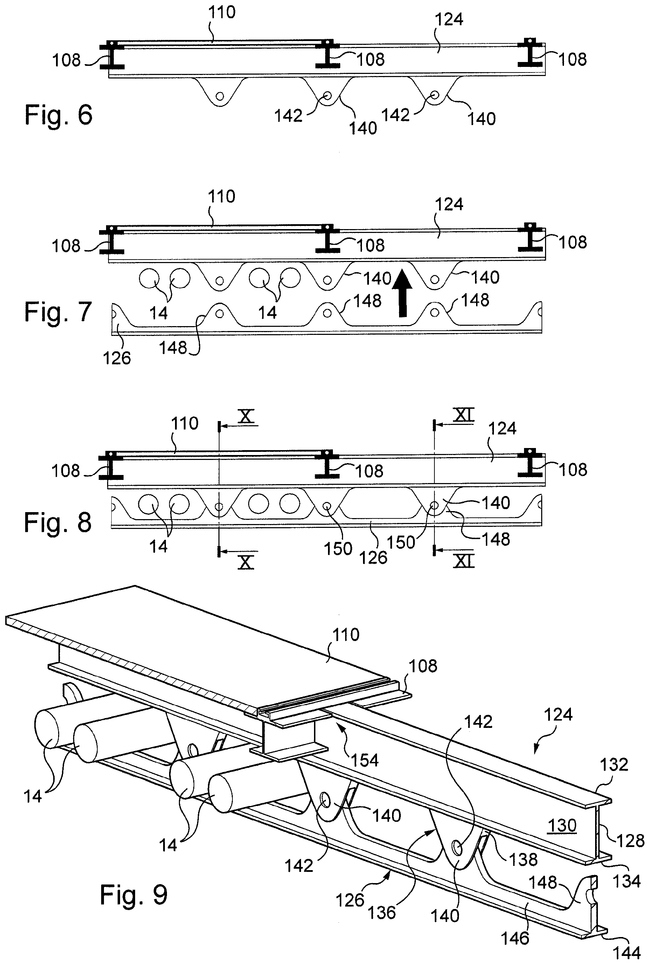

Comme on peut le voir notamment sur la figure 9, la partie supérieure 124 comporte un profilé 128 présentant une section en I.

On suppose dans toute la description que le profilé 128 s'étend horizontalement. Les orientations haut/bas font référence dans la présente description à une orientation "normale" d'un aéronef. Ainsi, la rainure des rails longitudinaux 108 est placée en position haute et la traverse 104 se trouve en dessous des panneaux 110.

Le profilé 128 présente ainsi une âme 130 sensiblement plane s'étendant dans un plan vertical. Cette âme 130 porte une aile supérieure 132 et une aile inférieure 134. L'aile supérieure 132 et l'aile inférieure 134 s'étendent quant à elles dans des plans horizontaux.

La face inférieure de l'aile inférieure 134 porte des étriers 136. Chaque étrier présente une base 138 de laquelle s'étendent deux pattes de liaison 140. Chacune de ces pattes de liaison 140 présente une forme sensiblement plane de contour globalement triangulaire, les angles du triangle étant arrondis. L'étrier 136 est centré par rapport au profilé 128 de telle sorte que les pattes de liaison 140 s'étendent verticalement et parallèlement à l'âme 130. Chaque patte de fixation 140 présente un alésage 142. L'alésage d'une patte de fixation 140 d'un étrier 136 étant aligné avec l'alésage 142 de l'autre patte de fixation 140 du même étrier 136.

La partie inférieure 126 présente une semelle 144 qui peut être par exemple similaire à l'aile inférieure 134 du profilé 128. En position montée de la partie inférieure 126, la semelle 144 s'étend parallèlement à l'aile supérieure 132 et à l'aile inférieure 134 du profilé 128.

La semelle 144 porte en son centre une nervure 146 qui s'étend verticalement en direction de la partie supérieure 124 (toujours dans la position montée de la traverse 104).

La nervure 146 porte des pattes de liaison 148. Chaque patte de liaison 148 présente par exemple la même forme qu'une patte de liaison 140. Les pattes de liaison 148 s'étendent dans un plan vertical (en position montée de la traverse 104) et sont destinées à venir prendre place à chaque fois entre deux pattes de liaison 140 de la partie supérieure 124. On retrouve dans chaque patte de liaison 148 un alésage 142 qui présente les mêmes caractéristiques (notamment diamètre) que les alésages 142 des pattes de liaison 140. Dans la forme de réalisation préférée représentée sur les figures, les deux pattes de liaison 140 d'un même étrier 136 présentent une même épaisseur tandis que la patte de liaison 148 présente une épaisseur plus importante.

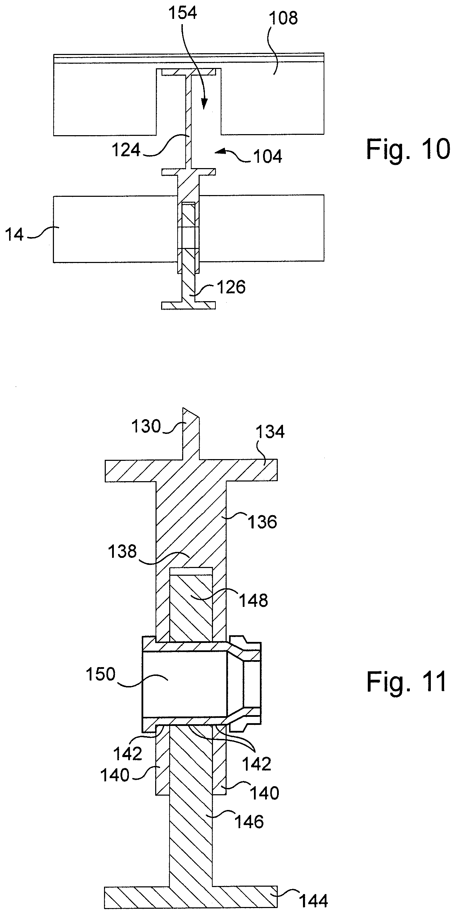

La figure 11 illustre l'assemblage de la partie inférieure 126 à la partie supérieure 124. Il est proposé d'utiliser ici un boulon conique 150. On choisit par exemple un boulon de fort diamètre qui est également allégé. La vis de ce boulon est ainsi, comme représenté sur la figure 11, tubulaire. L'utilisation d'un boulon conique permet de rattraper les écarts entre les pattes de liaison 140 de la partie supérieure 124 et les pattes de liaison 148 de la partie inférieure 126. L'utilisation de tels boulons permet donc de réaliser un bon positionnement de la partie inférieure 126 par rapport à la partie supérieure 124. Pour réaliser l'assemblage, les pattes de fixation 148 sont disposées chacune à chaque fois entre deux pattes de liaison 140 de la partie supérieure 124 de telle sorte que les trois alésages 142 correspondants soient alignés. La vis du boulon conique 150 peut alors être introduite dans les trois alésages 142 alignés et l'écrou du boulon est alors monté sur l'extrémité de la vis.

Comme on peut le voir sur les figures et comme il ressort de la description qui précède, les pattes de liaison 140, 148, tant celles de la partie supérieure 124 que celles de la partie inférieure 126, sont en saillie et forment ainsi comme des dents, qui peuvent être ou non régulièrement réparties, qui s'étendent toutes à partir d'un profilé. Lorsque les pièces correspondantes sont assemblées, des espaces formant des ouvertures 152 apparaissent entre les dents, ici les pattes de liaison 140, 148. La périphérie de ces ouvertures 152 est délimitée vers le haut par la partie supérieure 124 de la traverse 104 et vers le bas par la partie inférieure 126 de la traverse 104.

Les ouvertures 152 sont mises à profit pour permettre le passage de systèmes 14. La mise en place de ces systèmes est illustrée sur les figures 6 à 8. Lors de l'assemblage d'un aéronef, la partie supérieure 124 d'une traverse 104 est mise en place de la même manière qu'une traverse 4 de l'art antérieur était montée dans un aéronef. Cette partie supérieure 124 présente déjà des caractéristiques mécaniques suffisantes pour encaisser les contraintes habituelles que rencontre un avion. Le montage de cette partie supérieure 124 donne ainsi à la structure de l'aéronef une rigidité suffisante pour toutes les étapes de montage au cours de la fabrication de l'aéronef. Les divers systèmes 14 peuvent venir prendre place entre les étriers 136 de la partie supérieure 124. Bien entendu, la position des étriers peut éventuellement être adaptée aux systèmes devant prendre place sous le plancher. Une fois les systèmes 14 positionnés, la partie inférieure 126 est rapportée comme illustré sur la figure 7. Lorsque la partie inférieure 126 est positionnée, elle est assemblée, par exemple à l'aide de boulons coniques 150 comme illustré sur la figure 11, et on obtient la traverse 104 complète telle que montrée sur les figures 8 et 9. La partie inférieure 126 de la traverse 104 lui confère une résistance accrue, par rapport à la partie supérieure 124 seule, qui est suffisante pour résister à des charges importantes telles celles rencontrées lors d'accidents (crashs, dépressurisations, etc.).

Il peut être envisagé d'utiliser des matériaux différents pour réaliser la partie supérieure 124 et la partie inférieure 126. Les deux parties peuvent être réalisées dans des alliages métalliques. On peut également prévoir de réaliser la partie supérieure 124 par exemple dans un matériau composite à base de fibres de carbone (ou autre). En réalisant l'une des deux parties, partie supérieure 124 ou partie inférieure 126, dans un alliage métallique, il est possible de faire participer la traverse 104 à la fonction "retour de courant". Cette fonction est assurée dans les aéronefs à structure métallique par l'ensemble de la structure de l'aéronef. Toutefois, dans les aéronefs à structure composite, il convient de prévoir d'assurer un retour du courant dans le circuit électrique de l'aéronef.

La forme d'une traverse selon la présente invention peut être adaptée à différentes formes de fuselage et aux différentes contraintes définies par le cahier des charges pour la construction de l'aéronef. Les figures 5 à 10 illustrent l'intégration de telles traverses pour la réalisation d'un plancher. On retrouve ainsi des rails longitudinaux 108 qui peuvent être tout à fait similaires à des rails longitudinaux de l'art antérieur. On retrouve ici des rails longitudinaux 108 se présentant sous la forme d'un profilé en I sur lequel est prévu une rainure servant notamment à la fixation d'éléments, tels par exemple des sièges d'aéronef. Un tel rail longitudinal est connu de l'homme du métier et n'est pas décrit dans le détail ici. Pour réaliser un plancher, on prévoit de réaliser une découpe dans les rails longitudinaux 108 au niveau des traverses 104. On réalise ainsi dans les rails longitudinaux à chaque fois des logements 154 pour accueillir la traverse 104 correspondante.

Une fois les traverses 104 et les rails longitudinaux 108 mis en place, des panneaux 110 peuvent être mis en place pour former le plancher proprement dit. La figure 10 est une vue en coupe illustrant le montage d'un rail longitudinal 108 sur une traverse 104.

Comme il ressort de la description qui précède, une traverse selon la présente invention permet une intégration de celle-ci en deux phases. Une première phase permet l'intégration des systèmes en conférant une tenue mécanique suffisante pour toutes les opérations de montage. Au cours de la deuxième phase, la traverse est renforcée pour pouvoir résister aux charges importantes qu'elle est susceptible d'encaisser et vient finaliser le maintien des systèmes.

La solution proposée permet à la fois d'offrir un volume intéressant pour loger les systèmes et est optimisée pour permettre d'assurer une rigidité suffisante dans un espace restreint. Ainsi, la solution proposée présente à la fois l'avantage de résistance mécanique de la solution de l'art antérieur illustrée sur la figure 2 et l'avantage de faciliter l'intégration de systèmes de la solution de l'art antérieur illustrée sur la figure 3.

Bien entendu, la présente invention ne se limite pas à la forme de réalisation préférentielle décrite ci-dessus et illustrée sur les dessins, ni aux variantes évoquées. Elle concerne également toutes les autres variantes de réalisation à la portée de l'homme du métier dans le cadre des revendications ci-après.

## Revendications

1. Fuselage d'aéronef comportant des traverses (104) destinées à la réalisation d'un plancher, l'une au moins desdites traverses (104) comportant une partie supérieure (124), une partie inférieure (126), des moyens (140-150) de liaison de la partie inférieure à la partie supérieure, et au moins une ouverture (152) pour le passage de systèmes (14) délimitée entre la partie inférieure et la partie supérieure,
**caractérisée en ce que** seule la partie supérieure (124) de ladite traverse est fixée sur le fuselage et est dimensionnée de manière à supporter les contraintes susceptibles de s'appliquer à ladite traverse lorsque l'aéronef reste au sol, et **en ce que** la partie inférieure (126) de ladite traverse est fixée uniquement à la partie supérieure (124) de celle-ci de manière à la renforcer de telle sorte qu'ainsi assemblées, la partie supérieure (124) et la partie inférieure (126) sont aptes à supporter les contraintes susceptibles de s'appliquer à ladite traverse (104) dans des conditions de vol de l'aéronef.

2. Fuselage d'aéronef selon la revendication 1, **caractérisée en ce que** la partie supérieure (124) et la partie inférieure (126) de ladite traverse (104) présentent des pattes de liaison (140, 148), et **en ce que** les pattes de liaison (148) de la partie inférieure (126) sont disposées de manière à pouvoir faire face aux pattes de liaison (140) de la partie supérieure (124).

3. Fuselage d'aéronef selon l'une quelconque des revendications 1 et 2, **caractérisée en ce que** la partie supérieure (124) et la partie inférieure (126) présentent chacune des alésages (142) disposés de manière à pouvoir coïncider les uns avec les autres, et **en ce que** les moyens de liaison comportent un boulon conique (150).

4. Fuselage d'aéronef selon l'une quelconque des revendications 1 à 3, **caractérisée en ce que** la partie supérieure (124) présente des paires de pattes de liaison (140) formant des étriers (136), une patte de liaison (148) de la partie inférieure (126) pouvant venir prendre place entre deux pattes de liaison (140) de la partie supérieure (124), ou inversement.

5. Fuselage selon l'une des revendications 2 et 4, **caractérisé en ce qu'**entre lesdites pattes de liaison (140, 148) sont formées des ouvertures (152) dans lesquelles peuvent venir prendre place les divers systèmes (14), lesdites ouvertures (152) étant délimitées vers le haut par ladite partie supérieure (124) et vers le bas par ladite partie inférieure (126).

6. Fuselage d'aéronef selon l'une des revendications 1 à 5, **caractérisé en ce que** la partie supérieure (124) de ladite traverse est un profilé à section en I (128), et **en ce que** la partie inférieure (126) de ladite traverse présente une semelle (144) et une nervure (146).

7. Fuselage d'aéronef selon les revendications 4 et 6, **caractérisé en ce que** ledit profilé en I (128) comporte une aile inférieure (134) portant lesdits étriers (136) et **en ce que** ladite nervure (146) porte lesdites pattes de liaison (148) de la partie inférieure (126).

8. Fuselage d'aéronef selon l'une quelconque des revendications 1 à 7, **caractérisée en ce que** la partie supérieure (124) est réalisée dans un matériau différent de celui utilisé pour réaliser la partie inférieure (126).

9. Fuselage d'aéronef selon la revendication 7, **caractérisée en ce que** la partie supérieure (124) est réalisée dans une matière composite, notamment une matière composite intégrant des fibres de carbone, et **en ce que** la partie inférieure (126) est réalisée dans un matériau conducteur de l'électricité, tel un métal ou un alliage métallique.

10. Fuselage d'aéronef selon l'une des revendications 1 à 9, **caractérisé en ce que** ledit plancher comporte un ensemble de traverses conformes à ladite traverse (104) et disposées parallèlement les unes par rapport aux autres, **en ce que** les parties supérieures (124) des traverses sont reliées entre elles par des rails longitudinaux (108), et **en ce qu'**au moins un rail longitudinal (108) présente des encoches (154) dans chacune desquelles vient loger une traverse (104).

11. Aéronef **caractérisé en ce qu'**il comprend un fuselage selon l'une quelconque des revendications 1 à 10.

12. Procédé de réalisation d'un fuselage d'aéronef comportant un plancher, ledit plancher comportant des traverses formant une structure porteuse apte à recevoir des panneaux de plancher et à supporter des systèmes, l'une au moins desdites traverses étant réalisée en deux parties distinctes comprenant une partie supérieure et une partie inférieure délimitant entre elles au moins une ouverture pour le passage de systèmes, **caractérisé en ce que**
• dans une première étape seule la partie supérieure (124) de traverse est fixée sur le fuselage,
• dans une deuxième étape lesdits systèmes (14) sont mis en place sous ladite partie supérieure de traverse (124), et
• dans une troisième étape ladite partie inférieure (126) de traverse est solidarisée à ladite partie supérieure (124).

## Patentansprüche

1. Flugzeugrumpf, umfassend Querträger (104), die zur Herstellung eines Bodens bestimmt sind, wobei mindestens einer der Querträger (104) einen oberen Teil (124), einen unteren Teil (126), Mittel (140-150) zum Verbinden des unteren Teils mit dem oberen Teil und mindestens eine Öffnung (152) für den Durchgang von Systemen (14) aufweist, die zwischen dem unteren Teil und dem oberen Teil begrenzt ist,
**dadurch gekennzeichnet, dass** nur der obere Teil (124) des Querträgers an dem Rumpf befestigt ist und derart dimensioniert ist, den Spannungen standzuhalten, die auf den Querträger wirken können, wenn das Flugzeug auf dem Boden bleibt, und dass der untere Teil (126) des Querträgers nur an dem oberen Teil (124) von diesem derart befestigt ist, ihn derart zu verstärken, dass der obere Teil (124) und der untere Teil (126), wenn sie auf diese Weise zusammengebaut sind, geeignet sind, den Spannungen standzuhalten, die unter Flugbedingungen des Flugzeugs auf den Querträger (104) wirken können.

2. Flugzeugrumpf nach Anspruch 1, **dadurch gekennzeichnet, dass** der obere Teil (124) und der untere Teil (126) des Querträgers (104) Verbindungslaschen (140, 148) aufweisen und dass die Verbindungslaschen (148) des unteren Teils (126) derart angeordnet sind, den Verbindungslaschen (140) des oberen Teils (124) gegenüber liegen zu können.

3. Flugzeugrumpf nach einem der Ansprüche 1 und 2,
**dadurch gekennzeichnet, dass** der obere Teil (124) und der untere Teil (126) jeweils Bohrungen (142) aufweisen, die derart angeordnet sind, um miteinander übereinzustimmen, und dass die Verbindungsmittel einen konischen Bolzen (150) aufweisen.

4. Flugzeugrumpf nach einem der Ansprüche 1 bis 3,
**dadurch gekennzeichnet, dass** der obere Teil (124) Paare von Verbindungslaschen (140) aufweist, die Bügel (136) bilden, wobei eine Verbindungslasche (148) des unteren Teils (126) zwischen den zwei Verbindungslaschen (140) des oberen Teils (124) oder umgekehrt angeordnet werden kann.

5. Flugzeugrumpf nach einem der Ansprüche 2 und 4,
**dadurch gekennzeichnet, dass** zwischen den Verbindungslaschen (140, 148) Öffnungen (152) gebildet sind, in denen die verschiedenen Systeme (14) angeordnet werden können, wobei die Öffnungen (152) nach oben durch den oberen Teil (124) und nach unten durch den unteren Teil (126) begrenzt sind.

6. Flugzeugrumpf nach einem der Ansprüche 1 bis 5,
**dadurch gekennzeichnet, dass** der obere Teil (124) des Querträgers ein I-Profil (128) ist, und dass der untere Teil (126) des Querträgers eine Sohle (144) und eine Rippe (146) aufweist.

7. Flugzeugrumpf nach den Ansprüchen 4 und 6, **dadurch gekennzeichnet, dass** das I-Profil (128) einen unteren Flügel (134) aufweist, der die Bügel (136) trägt, und dass die Rippe (146) die Verbindungslaschen (148) des unteren Teils (126) trägt.

8. Flugzeugrumpf nach einem der Ansprüche 1 bis 7,
**dadurch gekennzeichnet, dass** der obere Teil (124) aus einem Material hergestellt ist, das sich von jenem unterscheidet, das verwendet wird, um den unteren Teil (126) herzustellen.

9. Flugzeugrumpf nach Anspruch 7, **dadurch gekennzeichnet, dass** der obere Teil (124) aus einem Verbundmaterial hergestellt ist, insbesondere einem Verbundmaterial, in dem Kohlenstofffasern integriert sind, und dass der untere Teil (126) aus einem elektrisch leitenden Material, wie einem Metall oder einer Metalllegierung, hergestellt ist.

10. Flugzeugrumpf nach einem der Ansprüche 1 bis 9,
**dadurch gekennzeichnet, dass** der Boden eine Anordnung von Querträgern aufweist, die dem Querträger (104) entsprechen und parallel zueinander angeordnet sind, dass die oberen Teile (124) der Querträger durch Längsschienen (108) miteinander verbunden sind und dass mindestens eine Längsschiene (108) Kerben (154) aufweist, in jeder von denen ein Querträger (104) aufgenommen wird.

11. Flugzeug, **dadurch gekennzeichnet, dass** es einen Rumpf nach einem der Ansprüche 1 bis 10 aufweist.

12. Verfahren zur Herstellung eines Flugzeugrumpfes, umfassend einen Boden, wobei der Boden Querträger aufweist, die eine Trägerstruktur bilden, die geeignet ist, Bodenplatten aufzunehmen und Systeme zu tragen, wobei mindestens einer der Querträger aus zwei verschiedenen Teilen hergestellt ist, die einen oberen Teil und einen unteren Teil aufweisen, die zwischen sich mindestens eine Öffnung für den Durchgang von Systemen begrenzen, **dadurch gekennzeichnet, dass**
• in einem ersten Schritt nur der obere Querträgerteil (124) auf dem Rumpf befestigt wird,
• in einem zweiten Schritt die Systeme (14) unter dem oberen Querträgerteil (124) angeordnet werden und
• in einem dritten Schritt der untere Querträgerteil (126) mit dem oberen Teil (124) fest verbunden wird.

## Claims

1. An aircraft fuselage comprising cross-members (104) intended for the formation of a floor, at least one of said cross-members (104) comprising an upper part (124), a lower part (126), means (140-150) for linking the lower part to the upper part, and at least one opening (152) for the passage of systems (14) which is delimited between the lower part and the upper part,
**characterised in that in that** only the upper part (124) of said cross-member is fastened to the fuselage and is dimensioned so as to bear the stresses to which said cross-member may be subjected when the aircraft remains on the ground, and **in that** the lower part (126) of said cross-member is fastened just to the upper part (124) thereof so as to reinforce it such that when assembled, the upper part (124) and the lower part (126) are able to bear the stresses to which said cross-member (104) may be subjected in flight conditions of the aircraft.

2. An aircraft fuselage according to claim 1,
**characterised in that** the upper part (124) and the lower part (126) of said cross-member (104) comprise linking lugs (140, 148), and **in that** the linking lugs (148) of the lower part (126) are disposed so as to be able to face the linking lugs (140) of the upper part (124).

3. An aircraft fuselage according to either one of claims 1 and 2, **characterised in that** the upper part (124) and the lower part (126) each have bores (142) disposed so as to be able to coincide with each other, and **in that** the linking means comprise a conical bolt (150).

4. An aircraft fuselage according to any one of claims 1 to 3, **characterised in that** the upper part (124) has pairs of linking lugs (140) forming clevises (136), a linking lug (148) of the lower part (126) being able to come into place between two linking lugs (140) of the upper part (124), or vice-versa.

5. A fuselage according to one of claims 2 and 4, **characterised in that** between said linking lugs (140, 148) openings (152) are formed in which the various systems (14) may be located, said openings (152) being delimited above by said upper part (124) and below by said lower part (126).

6. An aircraft fuselage according to one of claims 1 to 5, **characterised in that** the upper part (124) of said cross-member is a member (128) of I-shaped cross-section, and **in that** the lower part (126) of said cross-member has a base plate (144) and a rib (146).

7. An aircraft fuselage according to claims 4 and 6, **characterised in that** said member (128) of I-shaped cross-section comprises a lower flange (134) bearing said clevises (136) and **in that** said rib (146) bears said linking lugs (148) of the lower part (126).

8. An aircraft fuselage according to any one of claims 1 to 7, **characterised in that** the upper part (124) is produced from a different material to that used to produce the lower part (126).

9. An aircraft fuselage according to claim 7,
**characterised in that** the upper part (124) is produced from a composite material, in particular a composite material integrating carbon fibers, and **in that** the lower part (126) is produced from an electrically conducting material, such as a metal or a metal alloy.

10. An aircraft, fuselage according to one of claims 1 to 9, **characterised in that** said floor comprises a set of cross-members in accordance with said cross-member (104) and which are disposed parallel to each other, **in that** the upper parts (124) of the cross-members are linked together by longitudinal rails (108), and **in that** at least one longitudinal rail (108) has cut-outs (154) within each of which a cross-member (104) comes to be accommodated.

11. An aircraft, **characterised in that** it comprises a fuselage according to any one of claims 1 to 10.

12. A method of producing an aircraft fuselage comprising a floor, said floor comprising cross-members forming a load-bearing structure able to receive floor panels and to bear systems, at least one of said cross-members being produced in two distinct parts comprising an upper part and a lower part delimiting between them at least one opening for the passage of systems, **characterised in that**
• in a first step only the cross-member upper part (124) is fastened onto the fuselage,
• in a second step said systems (14) are put into place under said cross-member upper part (124), and
• in a third step said cross-member lower part (126) is joined to said upper part (124).
